# EUROPÄISCHE PATENTSCHRIFT

(11) **EP 3 524 365 B1**
(45) Veröffentlichungstag und Bekanntmachung des Hinweises auf die Patenterteilung: **27.07.2022**
(21) Anmeldenummer: 19401005.4
(22) Anmeldetag: 07.02.2019
(51) Int. Cl.: B08B 15/00, G21F 7/00, B65G 69/18

(54) **ANDOCKSYSTEM**
DOCKING SYSTEM
SYSTÈME D'AMARRAGE

(30) Priorität: 07.02.2018 DE 102018000978
(43) Veröffentlichungstag der Anmeldung: 14.08.2019
(73) Patentinhaber: Pharmatec GmbH, 01099 Dresden (DE)
(72) Erfinder: Cornelius, Hans-Dieter, D-01217 Dresden (DE); Kretzschmar, Ralf, 01304 Dresden (DE); Hentschel, Ingo, 01796 Pirna (DE)
(74) Vertreter: DREISS Patentanwälte PartG mbB

(56) Entgegenhaltungen:
- EP-A1- 1 213 244
- EP-A2- 1 550 833
- EP-A2- 2 843 271
- BE-A- 678 717
- DE-U1-202009 018 495
- FR-A1- 2 787 235
- US-A- 5 740 844

## Beschreibung

Die vorliegende Erfindung betrifft ein Andocksystem zum Transfer von bevorzugt pulverförmigen, hochaktiven pharmazeutischen Wirkstoffen aus einem Isolator in einen Ansatzbehälter. Pulverförmige pharmazeutische Mittel werden üblicherweise innerhalb eines Isolators vorbereitet und müssen nach der Vorbereitung weiterverarbeitet und transportiert werden. Innerhalb eines Isolators herrschen dabei sterile Bedingungen, die auch dauerhaft eingehalten werden müssen. Daher soll ein direkter Zugriff eines Operators in den Isolator vermieden werden. Für die Entnahme der pharmazeutischen Mittel aus dem Isolator sind aufwendige Schleusensysteme Stand der Technik.

Der Grund für den teilweise hohen Aufwand liegt darin, dass einerseits die Operatoren nicht mit Wirkstoffen kontaminiert bzw. nur in kontrollierbaren, geringen und zeitabhängigen Dosierungen ausgesetzt werden und andererseits die aus der Umwelt oder vom Operator natürlich vorhandenen Keime nicht in das Produkt gelangen dürfen. Letzteres kann zu schweren Komplikationen bei Patienten führen, wenn insbesondere die Keime zusammen mit dem Wirkstoff als Infusion direkt in den Blutkreislauf gelangen.

In letzter Zeit werden vorwiegend pulverförmige Wirkstoffe für Zytostatika verarbeitet, die zunächst im Isolator aufbereitet und danach in bereitgestellte Ansatzbehälter transferiert werden. Dort werden diese Wirkstoffe mittels Dosierens und Mischen in einer Trägerflüssigkeit zu Lösungen oder Suspensionen steril verarbeitet. Das Risiko, mit den Wirkstoffen in Kontakt zu geraten, ist deshalb angezeigt, da diese, bedingt durch ihre extrem geringe Partikelgröße, problemlos über die Umgebungsatmosphäre zu den Operatoren gelangen können.

Allgemein ergibt sich daraus die Forderung, dass während des Transfers das Andocksystem den vorgegebenen OEL-Wert von < 0,1 µg/m³ in beiden Kontaminationsrichtungen erfüllen muss.

Es ist naheliegend, dass beim Transfer das Pulver senkrecht nach unten in die nächste Bearbeitungszone überführt werden sollte. Für den Fall, dass der Andockvorgang direkt unter dem Isolatorboden erfolgt, sollte die Positionierung des jeweiligen Ansatzbehälters von Hand, in denen das Pharmaprodukt beim Transfer gelangt, nur in einer horizontalen Bewegungsrichtung, z.B. mit einem integrierten Fahrgestell erfolgen können, denn das Gewicht eines Ansatzbehälters kann >100 kg betragen und eine vertikale Bewegung von Hand wäre damit ausgeschlossen. Mobile Bewegungshilfen mit Hydraulik, die eine vertikale Bewegung mit den oben genannten Massen durchführen könnten, sollten möglichst vermieden werden, da im Havariefall Störungen mit hohen Kosten entstehen können. Ähnliches gilt, wenn auch mit deutlichen geringerem Risiko, wenn gleiches mit pneumatischen Bewegungshilfen durchgeführt wird.

EP 2 843 271 A2 beschreibt ein geteiltes Splitventil, das in der Lage ist, das Verstreuen eines körnigen Materials aus einem geschlossenen Vorratsbehälter (2) in einen darunter angeordneten Aufnahmebehälter (3) zu verhindern. Dieses koppelbare Splitventil dient dazu, nach dem Koppeln des Vorratsbehälters (2) in den darunter angeordneten Aufnahmebehälter (3) das im Vorratsbehälter (2) enthaltene Material ohne Verluste so zu leiten, dass keine Verunreinigungen mit eingeleitet werden können. Dies geschieht, indem ein im unteren Ventilteil angeordneter aktiver Ventilkörper (32) in einem im oberen Ventilteil angeordneten, halbkugelförmigen passiven Ventilkörper (12) um einen Drehpunkt (33) den Durchgang freigeben kann. Das Prinzip ist ähnlich einer Drosselklappe. Im Querschnitt zwischen den beiden Behältern (2) und (3) befinden sich immer konstruktive Teile, die den freien Durchgang behindern.

In EP 1 550 833 A2 wird eine Vorrichtung zum Laden und Entladen einer Prozessvorrichtung beschrieben. Es wird ein zu trocknendes Material aus einem Vorratsbehälter in die Prozessvorrichtung überführt. Die im trichterartigen Behälter 18 gespeicherte Substanz gelangt durch eine flexible Kupplung 32 in einen darunter angeordneten Trockner 10. Nach dem Beschickungsvorgang wird die Beschickungsvorrichtung 26 wieder vom Trockner 10 getrennt.

Die EP 1 213 244 A1 betrifft eine Doppelklappen-Andockvorrichtung zum Transferieren eines fließfähigen Produkts (24) von einem ersten Behältnis in (22) ein zweites Behältnis (23). Die Vorrichtung umfasst zwei Gehäusehälften (7,8), die lösbar miteinander zu verbinden sind, und jeweils eine Schließklappe (5,6) pro Gehäusehälfte, die mittels einer Halbwelle (28,27) schwenkbar in der zugeordneten Gehäusehälfte gelagert ist. In Verbindungsstellung der Andockvorrichtung liegen die Gehäusehälften und die Schließklappen aneinander an, und die Halbwellen der beiden Schließklappen fallen zu einer gemeinsamen Welle (29) zusammen, so dass beide Schließklappen über die gemeinsame Welle wahlweise zwischen einer Schließstellung und einer Offenstellung schwenkbar sind. Erfindungsgemäß ist in axialer Verlängerung der zusammengefügten Halbwellen jeweils eine Spanneinrichtung (1, 3, 2, 4) vorgesehen, die wahlweise in eine Entriegelungs- und Verriegelungsposition bringbar ist und Aufnahmen (18) aufweist, welche in Verriegelungsposition die jeweiligen abgeschrägten Enden der Halbwellen (28,27) umschließen und formschlüssig zusammenhalten.

FR 2 787 235 A1 offenbart eine Vorrichtung zum Verbinden von Türen in einer Vorrichtung mit einer dichten Verbindung zwischen zwei gegenüber der Außenwelt isolierten abgeschlossenen Räumen. Sie dient dem Überbringen des Inhalts des einen abgeschlossenen Raums in den anderen abgeschlossenen Raum.

DE 20 2009 018495 U1 beschreibt ein technisches System zum Umfüllen von Kohlenstoff-Nanoröhren (CNT) in ein Behältnis aus einem anderen Behältnis, wobei das System hierzu eine Verbindungseinrichtung zur Verbindung der beiden Behältnisse miteinander aufweist, die eine Doppelventilvorrichtung (300) aufweist. Dabei ist ein erstes Ventil (31) so ausgebildet ist, dass es mit einem der Behältnisse verbunden werden kann und das andere Ventil (32) ist so ausgebildet, dass es mit dem anderen Behältnis verbunden werden kann. Jedes der Ventile schließt sich nach der Anbringung am Behältnis unabhängig und dicht. Die beiden Ventile sind so ausgebildet, dass sie miteinander verbunden werden können, und diese Verbindung das Öffnen der Ventile ermöglicht, wobei die Vorrichtung eine Vorrichtung mit zwei Klappenventilen ist.

Die BE 678 717 A betrifft eine Vorrichtung aus der Kerntechnik zur fernbedienbaren Sicherung gegen Lösen eines Verbindungskanals von einem sogenannten"heissen" Caisson oder Behälter.

Bei der Betrachtung des Standes der Technik unter den oben genannten Randbedingungen gibt es zwecks Realisierung des Produkttransfers einige Lösungswege, von denen vorwiegend das RTP-System beim Transfer von Pharmavorprodukten und Hilfsmitteln zur Aufrechterhaltung des Produktionsprozesses in den Isolator eingesetzt wird und die hohen OEL-Forderungen nahezu erfüllt werden können. Für den Transfer aus dem Isolator gilt gleiches aber nur für die o.g. Hilfsmittel nicht, oder nur dann mit großem Aufwand für pulverförmige Produkte, die meistens unterhalb des Isolators in Ansatzbehälter transferiert werden müssen. Der Grund dafür liegt im Wesentlichen darin, dass z.B. mit den ansonsten ausgereiften RTP-System von La Calhene die vorgesehene Handhabung am Isolator dann extrem problematisch wird, wenn Ansatzbehälter wie oben beschrieben mit einer Gesamtmasse von > 100 kg, die eigentlich für das RTP-System nicht vorgesehen waren und dazu unterhalb des Isolators, zwecks Transfers der Pharmavorprodukte von Hand angedockt werden müssen.

Für den Fall, dass das RTP-System doch unterhalb des Isolators durch eine vertikale Hebung z.B. mittels eines pneumatischen Antriebes, ohne den relativ schweren Ansatzbehälter vorgenommen wird, ist ein Kompensator zum Ausgleich der Höhendifferenz einsetzbar.

Unter den Randbedingungen, dass einerseits für den Transfer des Pulvers die benetzbare Innenfläche vom Kompensator möglichst klein und glatt bleibt sowie das Material konforme FDA-Bedingungen erfüllt und andererseits für die o.g. Sterilisierungsparameter von Temperatur und Druck ausgelegt ist, ergeben sich für die bisher eingesetzten wichtigsten Kompensatoren zusammengefasst folgende Vor- und Nachteile. Besteht ein Kompensator aus einem Wellrohr, hergestellt aus austenitischen Stahl oder Kunststoff ergeben sich folgende Vor- und Nachteile:
Vorteile:
   - relativ glatte Oberfläche,
   - Material beständig gegenüber der o.g. Prozesstemperatur während der Sterilisation,
   - konstruktive Auslegung für die o.g. Drücke ausreichend.
Nachteil:
   - bedingt durch die Hinterschnitte der Wellen relativ große Oberfläche mit schlechtem Zugang beim Reinigen und dessen Kontrolle.

Andere Mitbewerber versuchen, den oben genannten Transfer mit einem Schleusensystem zu realisieren. Dabei entsteht beim Andocken ein Raum zwischen Isolator und Ansatzbehälter, z.B. der durch gegenseitiges axiales Verschieben von zwei gegenläufigen Rohrstutzen und dem nachfolgenden Aufblasen einer radial wirkenden Dichtung gebildet wird. Dies setzt aber voraus, dass vor dem eigentlichen Transfer der Pharmaprodukte dieser Raum mittels Begasung oder flüssigen Dekontaminationsmitteln sterilisiert werden muss und auch kann. Der Aufwand ist enorm, wenn noch zusätzlich montagebedingte Spalte u.a. zwischen den Gleitflächen der Bajonettverschlüsse nach dem Transfer gereinigt werden müssen. Insbesondere dann, wenn in die technisch bedingten Spalte infolge von Kapillarkräften eine Suspension aus Reinigungsflüssigkeit und pulverförmigen Wirkstoffpartikeln oder Keimen gelangt.

Eine weitere Möglichkeit ist die Verwendung von sogenannten Doppelklappen. Sie wurden eigentlich für den Transfer von Pharmaprodukten in pulverförmiger bis gröberer Konsistenz, vielfach als Trägerstoff für das spätere Coating der Wirkstoffe, z.B. mittels Wirbelbeschichtung eingesetzt. Während des Transfers der genannten Vorprodukte durch die Doppelklappen reichen oftmals Forderungen mit OEB-Werten 1-3 aus.

Für den Transfer von extrem feinpulverförmigen, hochtoxischen Wirkstoffen entstehen Probleme, wenn OEB-Werte bis 5 an der Schnittstelle, wo der Transfer beim Containment stattfindet, verlangt werden.

Die Gründe dafür liegen in den Verfahrensschritten, auf dem das System Doppelklappe aufgebaut ist:
- In den beiden Andockhälften, müssen drehbar gelagerte Klappenteller gegenüber der Gehäusewand dicht abschließen, dass wird durch FDA-konformes Elastomer am Klappenteller oder der Gehäusewand realisiert.
- Anfänglich eingesetzte aufblasbare Dichtringe, die ein kontaktloses Drehen der Teller ermöglichen, konnten sich nicht durchsetzen.
- Nach dem Zusammenfügen der Andockhälften werden die beiden Gehäuse und die Klappenteller mittels Elastomerformlingen abgedichtet.
- Danach werden die beiden Klappenhälften um 90° geschwenkt, so dass ein Durchlass für den Transfer frei wird, der aber auch teilweise über die Andockhälften führt.

Weitere Randbedingungen, die den Verfahrensablauf stören:
a) Elastomer dichtet nur dann, wenn vorwiegend orthogonal zur Dichtfläche eine Druckbelastung vorhanden ist,
b) das Drehen der Klappenteller in der Flanschöffnung ist nur möglich, wenn die beteiligten Werkstoffe, die das Abdichten unter a) ermöglichen gegeneinander gleitfähig sind, bekanntermaßen haben FDA-konforme Elastomere unter Druckbelastung geringe Gleiteigenschaften. Aus diesem Grund wurde der elastische Werkstoff mit einer PTFE-Schicht umhüllt. Die Einsatzdauer ist aber begrenzt und deren Verschleiß schlecht abschätzbar, wenn die Materialdehnung übermäßig groß wird.
c) besonders die Dichtung zwischen den Klappentellern neigt beim Drehen zum Lösen der erforderlichen Druckbelastung, sodass Pulverablagerungen zwischen die Klappenteller gelangen. Die Van-der-Waals-Kräfte zwischen Klappentelleroberfläche und pulverförmiger Ablagerung können dabei so groß werden, dass selbst nach dem Zwischenabheben der Klappenhälften eine Beseitigung des eingedrungenen Pulvers mittels hoher Luftströmung vielfach wenig Wirkung zeigt.

Zusammengefasst lässt sich ableiten, dass OEB-Werte von 5 für eine Doppelklappe vermutlich schwer realisierbar sind.

Es ist daher Aufgabe der Erfindung, Möglichkeiten für einen gefahrlosen Transfer pulverförmiger pharmazeutischer Mittel aus einem Isolator in einen Ansatzbehälter anzugeben, mit denen ein vereinfachtes und sicheres Handhaben von Ansatzbehältern unter Einhaltung gesetzlicher Sicherheitsanforderungen erreichbar ist.

Erfindungsgemäß wird diese Aufgabe mit einem Andocksystem, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Das erfindungsgemäße Andocksystem ist mit einem B-Teil (B), der mit einem Ansatzbehälter an dessen Öffnung befestigbar ist, und einem A-Teil (A), das am Isolator angeordnet ist, gebildet. Bevorzugt ist der Isolator, in dem das jeweilige pharmazeutische Mittel vorbereitet wird, vertikal oberhalb und der Ansatzbehälter vertikal unterhalb des Andocksystems angeordnet.

A- und B-Teil sind mittels Verbindungselementen miteinander verbindbar. Ein Kompensator, durch den der Transfer pharmazeutischer Mittel aus dem Isolator in den Ansatzbehälter stattfindet und der für einen Längenausgleich ausgebildet ist, ist Bestandteil des B-Teils.

Der Kompensator ist mittels eines Anschlussflansches, der an einer Stirnseite des Kompensators am Kompensator befestigt ist, an der Öffnung des jeweiligen Ansatzbehälters befestigbar.

An der gegenüberliegenden Stirnseite des Kompensators ist an diesem ein Basisflansch des B-Teils vorhanden, mit dem der Kompensator an einem Basisflansch, der am A-Teil vorhanden ist, befestigbar ist.

Der Basisflansch des A-Teils, der am Gehäuse des Isolators befestigt ist, ist mit einem schwenkbaren Isolatordeckel, der durch den Operator innerhalb des Isolators betätigt werden kann, verschließbar.

Für einen Längenausgleich des Kompensators, der bei einem Andocken eines Ansatzbehälters an den Isolator auftritt, ist ein Hubsystem zwischen einem Träger und einer Trägerplatte am B-Teil angeordnet, wobei an der Trägerplatte Verschlusselemente für die Herstellung einer Verbindung des Kompensators am Isolator und komplementäre Verschlusselemente vorhanden sind.

Pulverförmige pharmazeutische Mittel können bei geöffnetem Isolatordeckel und Flanschdeckel des B-Teiles aus dem Isolator durch den Kompensator in den angedockten Ansatzbehälter gelangen, was allein gravitationskraftbedingt erreichbar ist. Nachdem der Ansatzbehälter ausreichend befüllt worden ist, können Isolatordeckel vom A-Teil und der Flanschdeckel des B-Teiles geschlossen und die Verbindung zwischen A-Teil und B-Teil gelöst werden.

Ansatzbehälter und B-Teil können nach dem Lösen der Verbindung und Absenken des B-Teils mit Hilfe des Hubsystems horizontal bewegt werden. Der B-Teil des Andocksystems muss während der Sterilisierung dabei nicht zwingend vom Ansatzbehälter getrennt werden.

Die Verbindung zwischen dem A-Teil und B-Teil sollte bevorzugt mit schwenkbaren Bajonettverschlüssen hergestellt bzw. gelöst werden können, die vorteilhaft mit jeweils einem Schwenkantrieb manipulierbar sind. Bedingt durch die Bajonettverschlüsse verbleibt der angedockte B-Teil auch beim Ausfall der Pneumatik in der angedockten Position.

Zum Herstellen des Produkttransfers ist auf dem Isolatordeckel eine vom Operator betätigbare Drehvorrichtung angeordnet. Sie bewirkt, dass im angedockten Zustand der Flanschdeckel vom B-Teil im oder gegen den Uhrzeigersinn gedreht werden kann. Mit den diametral wirkenden Bajonettverschlüssen zwischen Flanschdeckel und der Basis des B-Teiles bzw. zwischen Flanschdeckel und den Isolatordeckel der Basis des A-Teiles wird erreicht, dass drehrichtungsabhängig entweder der Flanschdeckel vom B-Teil mit dem Isolatordeckel gelöst oder mit dem Isolatordeckel verbunden werden kann. Im ersten Fall wäre dann zum Beispiel der B-Teil verschlossen und damit vom A-Teil auch abdockbar.

Die auf dem Isolatordeckel mittig angebrachte Drehvorrichtung sollte in Richtung Flanschdeckel weisen, wo ein drehbares Formstück mit einer äußeren Randkontur und einer Vertiefung am Flanschdeckel mit dazu komplementärer Randkontur vorhanden sein kann, in die das Formstück zum Öffnen des Flanschdeckels in die Vertiefung einführbar ist. Mit dem Einführen des Formstücks in die Vertiefung kann eine formschlüssige Verbindung hergestellt werden, mit der die Drehbewegung der Drehvorrichtung auf den Flanschdeckel übertragen werden kann. Die Drehvorrichtung kann auch einen motorischen Antrieb aufweisen, der von außen aktiviert werden kann.

Das oben genannte Formstück kann eine mehreckige Kontur, z.B. eine Sechskantkontur, aufweisen.

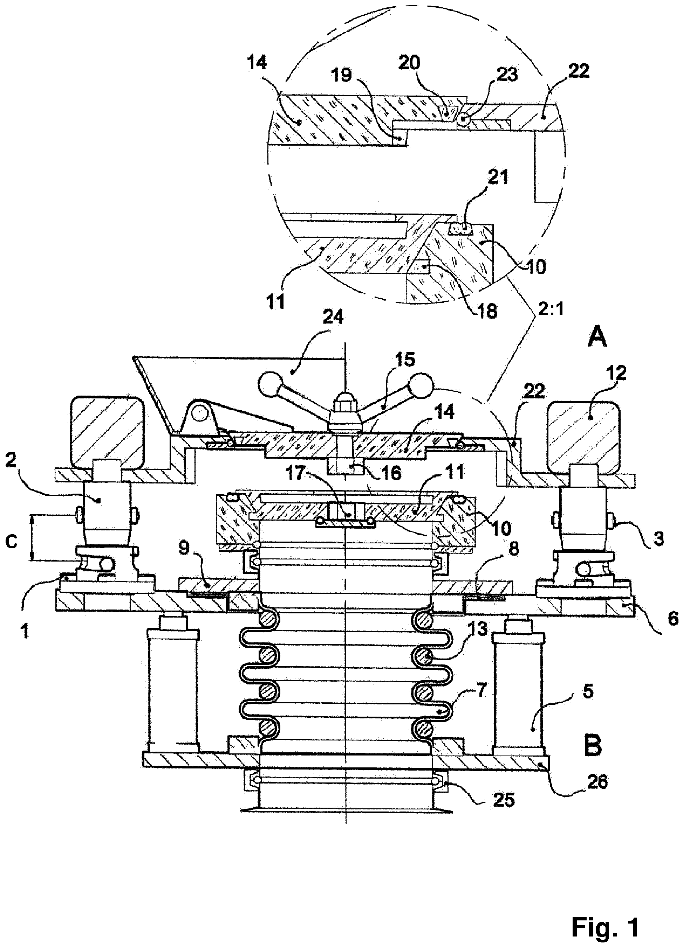

Kompensatoren, wie die in den Fig.1, Fig.2 und Fig.3 dargestellt sind, weisen einen sogenannten Wellrohrmantel aus unterschiedlichen Werkstoffen Metall, Kunststoff oder ähnliches auf, mit denen hohe axiale Verformungen ermöglicht werden. Wellrohr-Kompensatoren sind eigentlich für den Transfer von dosiertem Pulver aus pharmazeutischen Stoffen mit hohen Adhäsionseigenschaften, z.B. zur Herstellung von Zytostatika-Infusionen, nur bedingt geeignet, denn das portionierte, hochdosierte Pulver muss durch die Andockvorrichtung ohne Verluste transferiert werden, ohne dass Ablagerungen in den Wellentälern eines so ausgebildeten Kompensators verbleiben können.

Um die bei der Verwendung von Wellrohr-Kompensatoren genannten Nachteile weitestgehend zu eliminieren, wird beim Transfer von pharmazeutischem Pulver ein Trichter mit langen Auslaufrohr eingesetzt. Er verhindert eine direkte Produktberührung während des Transfers gegenüber den gesamten inneren Flächen von Bauteilen des Andocksystems, da das entsprechend lange Auslassrohr vom Trichter (nicht dargestellt) den kompletten Bauteilstrang bis zum Ansatzbehälter optisch abdeckt.

Das Hubsystem kann mit mindestens drei Hubzylindern gebildet sein. Es sollten auch mindestens zwei Verschlusselemente, mit denen das B-Teil am A-Teil befestigt werden kann, vorhanden sein. Hubzylinder und Verschlusselemente sollten jeweils mit gleichen Winkelabständen zueinander angeordnet sein.

Wie schon oben beschrieben, können die Verschlusselemente auch das ungewollte Absenken des B-Teiles in der Andockphase bei evtl. Druckausfall in den Hubzylindern verhindern.

Zwischen Trägerplatte und einem Trägerflansch kann ein Gleitring angeordnet sein, mit dem eine Abdichtung erreichbar ist.

Der Kompensator kann über seinen Anschlussflansch mittels Tri-Clamp-Flanschverbindungen mit dem Ansatzbehälter verbunden werden.

An Hand der Ausführungen zum Stand der Technik kann also ein Andocksystem zur Verfügung gestellt werden, dass die o.g. Nachteile beseitigt oder zumindest minimiert.

Das neue Andocksystem hat folgende Vorteile:
- OEL-Vorgaben von ≤ 0,1 µg/m ³, das einem OEB -Wert von 5 entspricht, können erfüllt werden,
- keine vorherige notwendige Demontage von Baugruppen seitens des Andocksystems während der SIP (Sterilization-in-Place) mit Prozessparametern von Temperatur ≤ 180°C und Druck ≤ 6 bar,
- vertikales Andocken unter dem Isolator ohne Zuhilfenahme von handhabenden Lasten seitens des Operators ist möglich,
- kein Gewichtslimit für vertikal anzudockende Baugruppen,
- und es sollten keine sog. Schleusenräume vorliegen, die nach dem Andocken und vor dem Transfer von Produkten, z.B. zwischen Isolator und Ansatzbehälter, sterilisiert werden müssen.

Nachfolgend soll die Erfindung beispielhaft näher erläutert werden. Dabei zeigen:
- Fig. 1: ein Beispiel eines erfindungsgemäßen Andocksystems in einem abgedockten Zustand mit geschlossenen Isolatordeckel 14 auf den Basisflansch 22 vom A-Teil und den geschlossenen Basisflansch 10 mit Hilfe des Flanschdeckels 11 in einer Schnittdarstellung;
- Fig. 2: das Beispiel nach der Figur 1 in einem angedockten Zustand in einer Schnittdarstellung;
- Fig. 3: zeigt den Zustand, bei dem pharmazeutische Mittel vom Isolator in den Ansatzbehälter transferiert werden können in einer Schnittdarstellung

Im konkreten Anwendungsbeispiel wird das Andocksystem, bestehend aus A- und B-Teil, für den Produkttransfer von wirkstoffhaltigem Pulver aus dem Isolator in z.B. mobile Ansatzbehälter beschrieben. In dem Ansatzbehälter befinden sich im Regelfall vor dem Produkttransfer flüssige Pharmaprodukte, die zusammen mit der Masse des Ansatzbehälters ein Gewicht von ≥ 100 kg aufweisen können.

Das komplette Andocksystem ist so ausgelegt, dass sämtliche Oberflächen vom A- und B-Teil des Andocksystems, die nach dem Abdocken mit der Außenatmosphäre in Berührung kommen, nicht erst von wirkstoffhaltigen, pulverförmigen Stoffen benetzt und später mit großem Aufwand wieder entfernt werden müssen. Damit ist es auch möglich, das An - und Abdocken ohne dazwischen eingefügte Sterilisierungsmaßnahmen vorzunehmen.

Fig. 1 zeigt das Andocksystem vor dem Andocken des Ansatzbehälters mit dem horizontalen Positionieren des B-Teiles (B) unter dem Isolator, wo der A-Teil (A) des Andocksystems angeordnet und am Isolator (nicht dargestellt) befestigt ist. Dazu werden die beiden Bajonettverschlüsse 1 vom B-Teil gegenüber den Positionierbolzen 2 vom A-Teil axial zugeordnet ausgerichtet. Dazu besitzt der Ansatzbehälter mit dem daran befestigten B-Teil ein Fahrwerk (nicht dargestellt), mit dem das Positionieren in Bezug zum B-Teil durch den Operator vorgenommen werden kann.

Die horizontale Zuordnung von A- und B-Teil sichert mit, dass beim späteren Bewegen des Ansatzbehälters in vertikaler Richtung unter dem A-Teil keine Kollision stattfinden kann.

Ist die horizontale Zuordnung, kontrolliert mittels Sensoren (nicht gezeigt), erreicht, wird das Fahrwerk des mobilen Ansatzbehälters lagefixiert.

Abschließend wird der entstandene vertikale Abstand C zwischen den Achsen der Rollen 3 an den Positionierbolzen 2 und der zugeordneten Position an den beiden Bajonettverschlüssen 1 mittels weiterer Sensoren (nicht gezeigt) vermessen.

Mit einem pneumatischen Hubsystem, welches bei diesem Beispiel mit vier Hubzylindern 5 gebildet ist, werden zunächst Baugruppen des B-Teiles um den o.g. gemessenen Betrag vertikal so weit angehoben, dass mit Hilfe der pneumatisch bewegbaren Positionierbolzen 2 und den dazugehörigen Rollen 3 in den Bajonettverschlüssen 1 eine Abdichtung mit den Doppel-O-Ring 21 zwischen Basisflansch 10 vom B-Teil und dem Basisflansch 22 vom A-Teil erfolgt.

Mit dem pneumatischen Hubsystem werden nachfolgende Baugruppen vom B-Teil angehoben:
- Trägerplatte 6 für den Kompensator 7
- Kompensator 7
- Gleitring 8
- Trägerflansch 9 mit dem Übergangsstück Tri-Clamp-Basisflansch 10
- Basisflansch 10 vom B-Teil mit den Flanschdeckel 11
- Flanschdeckel 11 vom Basisflansch 10.

Mittels Sensoren wird der vertikale Hub in Richtung Isolator und die horizontale Ausrichtung des B-Teiles zum am Isolator befindlichen A-Teil des Andocksystems überwacht.

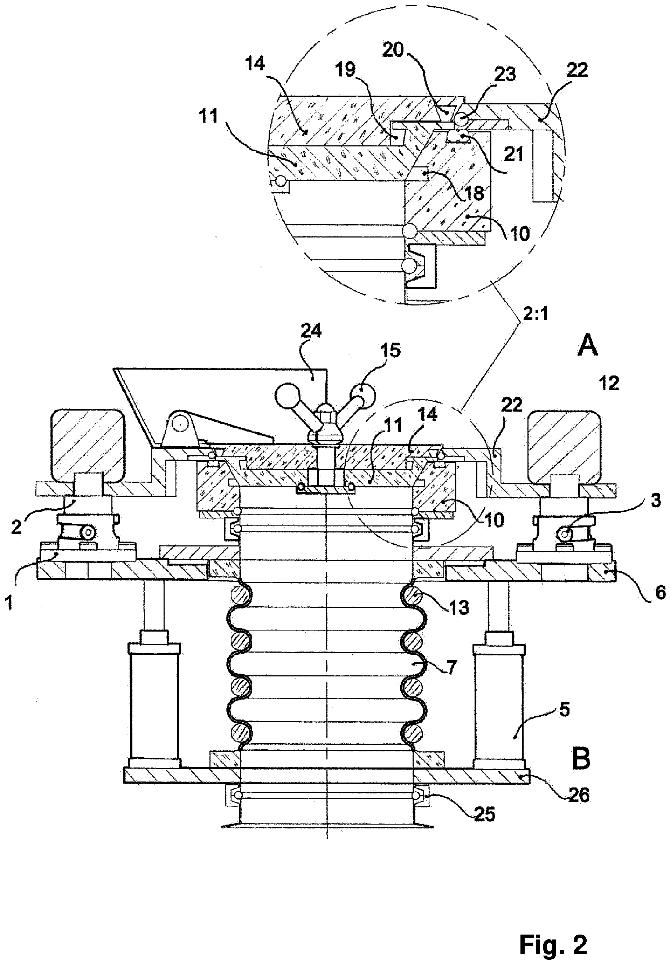

Fig. 2 zeigt den an dem A-Teil (A) angedockten und verriegelten B-Teil (B).

Hat mit dem vorher gemessenen vertikalen Hub nach Fig. 1 der B-Teil den A-Teil erreicht, werden mit den pneumatisch drehbaren Positionierbolzen 2 am A-Teil, ausgelöst durch die beiden Schwenkantriebe 12, die Bajonettverschlüsse 1 am B-Teil aktiviert und in Richtung A-Teil nochmals um ca. 2 mm angehoben und verriegelt. Damit ist der Andockvorgang zwischen Isolator und Ansatzbehälter, d.h. zwischen A-Teil am Isolator und B-Teil montiert auf dem Ansatzbehälter, abgeschlossen. Auch bei einem Druckverlust in der Pneumatik würde die Verriegelung verhindern, dass ein unkontrolliertes Abdocken stattfinden kann.

Um das horizontale Ausrichten des B-Teiles zum A-Teil zu unterstützen, lagert der Basisflansch 10 vom B-Teil, der Flanschdeckel 11, die Trägerplatte 6, der Trägerflansch 9 mit den Übergangsstück Tri-Clamp zum Basisflansch 10 und der obere Flanschteil des Kompensators 7, zusätzlich auf einem Gleitring 8, der dem Kompensator 7 eine horizontale Bewegung zwecks Lageausgleich ermöglicht. Auf der Trägerplatte 6 befinden sich weiterhin die beiden Bajonettverschlüsse 1 für die Positionierbolzen 2 vom A-Teil. Die vier Hubzylinder 5 stabilisieren die Trägerplatte 6 in der horizontalen Lage beim vertikalen Bewegen des B-Teils zum A-Teil.

Der Kompensator 7 besteht bei diesem Beispiel aus einem Wellkörper, hergestellt aus einem Virgin-PTFE- Material. In den Wellen-Tälern befinden sich Metallringe 13. Damit ist es möglich, dass innerhalb des Kompensators 7 Drücke bis ca. 6 bar, z.B. während der Sterilisierung, auftreten können.

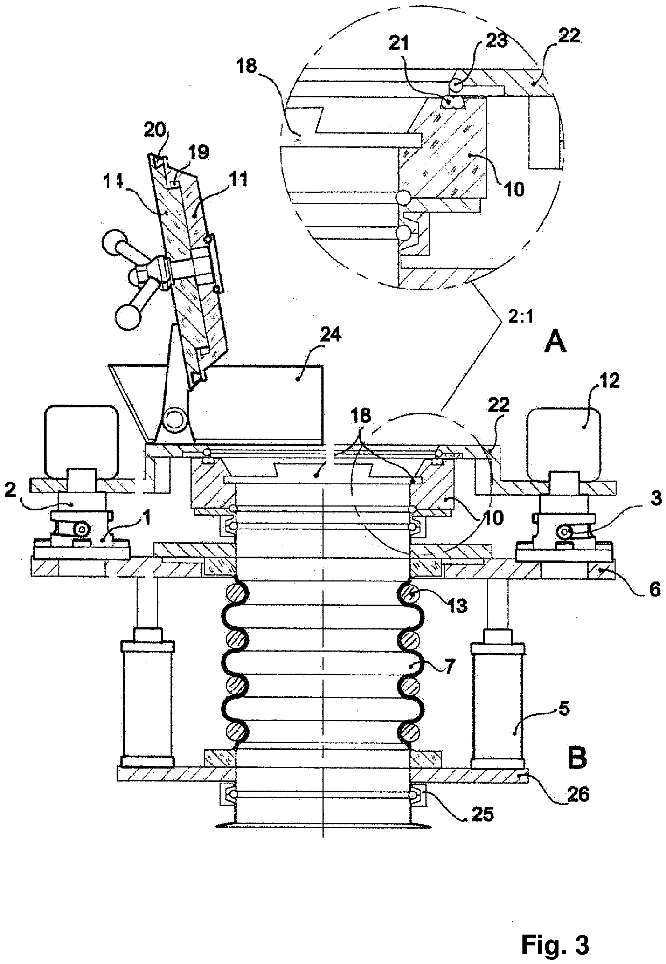

Fig. 3 zeigt den Zustand, bei dem pharmazeutische Mittel vom Isolator in den Ansatzbehälter transferiert werden können.

Nachfolgend werden die Abläufe beschrieben, die ausgehend von Figur 2 zum Zustand gemäß Figur 3 führen.

Zunächst erfolgt das Trennen des Flanschdeckels 11 vom Basisflansch 10. Es beginnt damit, dass die zunächst axial nach oben geschobene Drehvorrichtung 15 so vertikal abgesenkt wird, dass das unten an der Drehvorrichtung 15 angebrachte z.B. sechskantförmige Formstück 16 in die komplementäre Vertiefung 17 vom Flanschdeckel 11 gelangt und damit ein formschlüssiger Kontakt zwischen der Drehvorrichtung 15 und Flanschdeckel 11 entsteht. Es ist die Voraussetzung dafür, dass eine Drehbewegung ausgeführt von der Drehvorrichtung 15 auf den Flanschdeckel 11, übertragen werden kann.

In Abhängigkeit von der Drehrichtung des Flanschdeckels 11 bewirken die gegenläufigen Drehverschlüsse 18 und 19, dass einerseits die Drehverschlüsse 18 den Flanschdeckel 11 mit dem Basisflansch 10 verbinden bzw. trennen und gleichzeitig die gegenläufig angeordneten Drehverschlüsse 19 den Flanschdeckel 11 vom Isolatordeckel 14 trennen bzw. verbinden.

Zusammengefasst heiß das, dass abhängig von der Drehrichtung einerseits die am Flanschdeckel 11 angebrachten Drehverschlüsse 18 entweder den Flanschdeckel 11 mit dem Basisflansch 10 verbinden, dann wäre die Verbindung zwischen Flanschdeckel 11 und Isolatordeckel 14 deaktiviert. Sind andererseits die Drehverschlüsse 19 am Flanschdeckel 11 mit dem Isolatordeckel 14 verbunden, wäre die Verbindung zwischen Flanschdeckel 11 und Basisflansch 10 deaktiviert.

Gemäß dem oben genannten Schritt, wo mit Hilfe der Drehvorrichtung 15 ein Verbindung zwischen dem Isolatordeckel 14 und dem Flanschdeckel 11 entsteht, kann der Isolatordeckel 14 zusammen mit dem Flanschdeckel 11 gemäß Figur 3 so geschwenkt werden, dass der Transfer vom Isolator in den Ansatzbehälter stattfinden kann.

Im Regelfall wird der Isolatordeckel 14 vom Operator beim Verschließen mittels Schwenken auf den Basisflansch 22 des A -Teiles aufgelegt und mit Hilfe eines sog. Knebelverschlusses (nicht dargestellt) vor unbeabsichtigtes Öffnen gesichert.

Für den Fall, dass die oben genannten Prozessabläufe wie vorgesehenen und durch Sensoren (nicht dargestellt) kontrolliert durchgeführt werden, d.h. der B-Teil ist am A-Teil angedockt und der Flanschdeckel 11 ist mittels der Drehvorrichtung 15 am Isolatordeckel verbunden, wird der oben genannte Knebelverschluss entsichert und das Öffnen des Isolatordeckels 14 zusammen mit dem Flanschdeckel 11 kann vom Operator vorgenommen werden. Mit dem gemeinsamen Schwenken von Isolatordeckel 14 und Flanschdeckel 11 um ca. 100 ° ist dann das System für den anstehenden Produkttransfer geöffnet und die pulverförmigen Pharmaprodukte gelangen vom Isolator über das Andocksystem in den Ansatzbehälter für die spätere weitere Verarbeitung.

Die beschriebene Lösung gewährleistet, dass unabhängig von der Drehrichtung des Flanschdeckels 11 keine Außenatmosphäre, in der sich z.B. der Operator befindet, weder in den Isolator noch in den Ansatzbehälter gelangt und umgekehrt keine Prozessatmosphäre in die äußere Umgebung entweicht.

Eine direkte Produktberührung während des Transfers gegenüber den gesamten inneren Flächen von Bauteilen des Andocksystems findet nicht statt, wenn wie oben beschrieben der Einfülltrichter ein entsprechend langes Rohr aufweist, das den gesamten Bauteilstrang bis zum Ansatzbehälter optisch abdeckt.

Die genannten Pulverprodukte beinhalten auch sog. Schwebeteilchen, die sich während des Pulvertransfers in der Raumluft des Isolators befinden können. Dabei verhindert der Dichtring 20, dass während des Pulvertransfers kein Produkt in Form von Schwebeteilchen in den von Flanschdeckel 11 und Isolatordeckel 14 gebildeten Innenraum gelangen und von dort aus nach dem Abdocken eventuell die Außenatmosphäre erreichen.

Der Doppel-O-Ring 21 dichtet die Verbindung zwischen Basisflansch 22 vom A-Teil und Basisflansch 10 vom B-Teil sowie die Verbindung Basisflansch 10 und Flanschdeckel 11 ab.

Bei geschlossenem Isolatordeckel 14 dichtet der O-Ring 23 den Basisflansch 22 vom A-Teil und damit den Isolator gegenüber der Außenatmosphäre ab.

Die Anordnung der elastomeren Dichtungen wurde so gewählt, dass eine optisch funktionelle Kontrolle auch nach der Montage noch gegeben ist.

Obwohl trotz der optimalen Einbauposition für die Dichtringe 20, 21, 23 beim Dichtprozess durch das Schwenken des Flanschdeckels 11 um ca. 45° nur geringfügige Querkräfte entstehen, die die bekannten Walkkräfte auf der Elastomeroberfläche auslösen könnten, sind alle Dichtringe zwecks besserer Gleiteigenschaften zusätzlich noch mit PTFE beschichtet.

Die Bauhöhe der pneumatischen Schwenkantriebe 12 bedingt, dass sich zwischen Isolatorboden und Basisflansch 22 vom A-Teil ein konisches Rohrstück 24 befindet. Dies hat den Vorteil, dass damit zusätzlich die Bewegungsfreiheit für den Operator verbessert wird, wenn unterhalb des Isolatorbodens am A-Teil handhabende Arbeiten, z.B. bei der Wartung, vorgenommen werden müssen.

Der untere Flansch vom Kompensator 7 und die Gehäuse der 4 Hubzylinder 5 sind am Träger 26 befestigt. Unterhalb des Trägers 26 befindet sich eine Tri-Clamp-Flanschverbindung 25. Sie verbindet den B-Teil des Andocksystems mit dem Ansatzbehälter.

Das Andocksystem ist so ausgelegt, dass es in den SIP-Reinigungszyklus integriert werden kann. Daraus folgend bleibt der B-Teil vom Andocksystem während der Sterilisierung mit dem Ansatzbehälter verbunden.

### Bezugszeichenliste

- 1: Bajonettverschlüsse
- 2: Positionierbolzen
- 3: Rollen am Positionierbolzen 2
- 5: Hubzylinder
- 6: Trägerplatte für den Kompensator 7
- 7: Kompensator
- 8: Gleitring
- 9: Trägerflansch mit dem Übergangsstück Tri-Clamp-Basisflansch 10
- 10: Basisflansch vom B-Teil mit Flanschdeckel 11
- 11: Flanschdeckel vom Basisflansch 10
- 12: Schwenkantriebe
- 13: Metallringe
- 14: Isolatordeckel vom Basisflansch 22
- 15: Drehvorrichtung
- 16: Formstück
- 17: Vertiefung für das Formstück
- 18: Drehverschlüsse zum Verbinden der Teile 10 mit 11 als Verschlusselement
- 19: Drehverschlüsse zum Verbinden der Teile 11 mit 14 als Verschlusselement
- 20: Dichtring
- 21: Doppel-O-Ring
- 22: Basisflansch vom A-Teil mit Isolatordeckel 14
- 23: O-Ring
- 24: konisches Rohrstück
- 25: Anschlussflansch zwecks Montage auf dem Ansatzbehälter
- 26: Träger vom B-Teil

- C: gemessener Abstand zwischen Bajonettverschluss 1 und den Rollen 3 vom Positionierbolzen 2

## Patentansprüche

1. Andocksystem, geeignet für den Transfer pulverförmiger pharmazeutischer Mittel aus einem Isolator in einen Ansatzbehälter, wobei das Andocksystem umfasst
- ein B-Teil, das mit dem Ansatzbehälter an dessen Öffnung befestigbar ist, und
- einem A-Teil, das am Isolator angeordnet ist, wobei
- A- und B-Teil mittels Verbindungselementen Bajonettverschlüsse (1), Positionierbolzen (2) und Rollen (3) miteinander verbindbar sind und
- ein Wellrohr-Kompensator (7) durch den der Transfer pharmazeutischer Mittel aus dem Isolator in den Ansatzbehälter stattfindet, für einen Längenausgleich ausgebildet ist, Bestandteil des B-Teils ist und
- wobei eine Stirnseite des Kompensators (7) mit einem dem Anschlussflansch (26) verbunden ist, der eine Tri-Clamp Klemmverbindung (25) aufweist, mit der der komplette B-Teil am Ansatzbehälter befestigbar ist, und
- an der gegenüberliegenden Stirnseite des Kompensators (7) an diesem ein Basisflansch (10) des B-Teils vorhanden ist, mit dem der Kompensator (7) an einem Basisflansch (22), der am A-Teil vorhanden ist, befestigbar ist, wobei
- die Öffnung des Basisflansches (22) des A-Teils mit einem Isolatordeckel (14) und einem am Basisflansch (10) des B-Teils befestigbaren Flanschdeckel (11) verschließbar ist und
- für einen Längenausgleich des Kompensators (7), der bei einem Andocken eines Ansatzbehälters an den Isolator gelangt, ein Hubsystem zwischen einem Träger (26) und einer Trägerplatte (6) angeordnet ist, wobei
- am Isolatordeckel (14) eine Drehvorrichtung (15) mit einem in Richtung Flanschdeckel (11) weisenden drehbaren Formstück (16) befindet, das mit einer äußeren Randkontur in eine komplementäre Vertiefung (17) vom Flanschdeckel (11) einführbar ist und daraus folgend eine richtungsunabhängige Drehbewegung des Flanschdeckels (11) um seine Zentralachse ermöglicht wird,
- wobei das Andocksystem derart ausgeführt ist,
dass mit Hilfe von def diametral wirkenden Drehverschlüssen (18. 19) drehrichtungsabhängig entweder der Flanschdeckel (11) mit dem Basisflansch (10) verbunden wird und andererseits die Verbindung zwischen Flanschdeckel (11) und Isolatordeckel (14) geöffnet ist und bei Drehrichtungsumkehr der Flanschdeckel (11) mit dem Isolatordeckel (14) verbunden wird und die Verbindung zwischen Flanschdeckel (11) und dem Basisflansch (10 ) geöffnet ist und
- dass sich am äußeren Rand des Isolatordeckels (14) und am Basisflansch (22) eine Schwenkeinrichtung befindet, die zum Öffnen und Schließen des Isolatordeckels (14) ausgebildet ist.

2. Andocksystem nach Anspruch 1, **dadurch gekennzeichnet, dass** die Verschlusselemente (1, 2, 3) mit jeweils einem Schwenkantrieb (12) manipulierbar sind.

3. Andocksystem nach einem der vorhergehenden Ansprüche, **dadurch gekennzeichnet, dass** der Kompensator (7) aus einem elastisch verformbaren Material gebildet ist.

4. Andocksystem nach einem der vorhergehenden Ansprüche, **dadurch gekennzeichnet, dass** das im B-Teil angeordnete Hubsystem aus mindestens drei Hubzylindern (5) gebildet ist und Verschlusselemente aufweist, die jeweils mit gleichen Winkelabständen zueinander angeordnet sind.

5. Andocksystem nach einem der vorhergehenden Ansprüche, **dadurch gekennzeichnet, dass** zwischen Trägerplatte (6) und einem Trägerflansch (9) ein Gleitring angeordnet ist.

6. Andocksystem nach einem der vorhergehenden Ansprüche, **dadurch gekennzeichnet, dass** der jeweilige Ansatzbehälter mit dem angebrachten B-Teil mittels eines Fahrwerks horizontal unter dem Isolator zwecks Positionierung bewegbar ist.

## Claims

1. Docking system suitable for transferring powdered pharmaceutical agents from an isolator to a preparation container, wherein the docking system comprises
- a B-part which can be fastened to the preparation container at the opening thereof, and
- an A-part which is arranged on the isolator, wherein
- the A- and B-part can be interconnected by means of connecting elements such as bayonet locks (1), positioning bolts (2) and rollers (3) and
- a corrugated-tube compensator (7) through which the transfer of pharmaceutical agents from the isolator into the preparation container takes place is designed for length compensation, is part of the B-part and
- wherein one end face of the compensator (7) is connected to a connecting flange (26) which has a tri-clamp clamping connection (25) by means of which the entire B-part can be fastened to the preparation container, and
- on the opposite end face of the compensator (7) a base flange (10) is present on the B-part, by means of which the compensator (7) can be fastened to a base flange (22) present on the A-part, wherein
- the opening of the base flange (22) of the A-part can be closed with an isolator cover (14) and a flange cover (11) that can be fastened to the base flange (10) of the B-part and
- a lifting system is arranged between a carrier (26) and a carrier plate (6) for length compensation of the compensator (7), which arrives at the isolator when a preparation container is docked, wherein
- on the isolator cover (14) there is a rotary device (15) having a rotatable molding (16) which points in the direction of the flange cover (11) and can be inserted with an outer edge contour into a complementary recess (17) in the flange cover (11) and consequently a direction-independent rotational movement of the flange cover (11) about its central axis is made possible,
- wherein the docking system is designed in such a way that, with the aid of the diametrically acting rotary locks (18, 19), depending on the direction of rotation either the flange cover (11) is connected to the base flange (10) and, on the other hand, the connection between the flange cover (11) and the isolator cover (14) is open, and, when the direction of rotation is reversed, the flange cover (11) is connected to the isolator cover (14) and the connection between the flange cover (11) and the base flange (10) is open, and
- that a pivoting means is located on the outer edge of the isolator cover (14) and on the base flange (22), which means is designed to open and close the isolator cover (14).

2. Docking system according to claim 1, **characterized in that** the closure elements (1, 2, 3) can each be manipulated with a pivot drive (12).

3. Docking system according to one of the preceding claims, **characterized in that** the compensator (7) is formed from an elastically deformable material.

4. Docking system according to any of the preceding claims, **characterized in that** the lifting system arranged in the B-part is formed by at least three lifting cylinders (5) and has locking elements which are each arranged at equal angular distances from one another.

5. Docking system according to any of the preceding claims, **characterized in that** a sliding ring (8) is arranged between the carrier plate (6) and a carrier flange (9).

6. Docking system according to any of the preceding claims, **characterized in that** the relevant preparation container with the attached B-part can be moved horizontally under the isolator by means of a running gear for the purpose of positioning.

## Revendications

1. Système d'accostage adapté au transfert d'agents pharmaceutiques pulvérulents d'un isolateur dans un récipient de préparation, dans lequel le système d'accostage comprend:
- une partie B qui peut être fixée au récipient de préparation au niveau de son ouverture, et
- une partie A qui est disposée sur l'isolateur, dans lequel
- lesdites parties A et B peuvent être reliées entre elles au moyen d'éléments de liaison, des fermetures à baïonnette (1), des boulons de positionnement (2) et des galets (3), et
- un compensateur de tuyau ondulé (7) à travers lequel s'effectue le transfert d'agents pharmaceutiques de l'isolateur dans le récipient de préparation, qui est conçu pour une compensation de longueur, fait partie de la partie B et
- dans lequel une face frontale du compensateur (7) est reliée à une bride de raccordement (26) qui présente une liaison de serrage tri-clamp (25) au moyen de laquelle toute la partie B peut être fixée au récipient de préparation, et
- sur la face frontale opposée du compensateur (7) se trouve une bride de base (10) de la partie B, au moyen de laquelle le compensateur (7) peut être fixé à une bride de base (22) qui est présente sur la partie A, dans lequel
- l'ouverture de la bride de base (22) de la partie A peut être fermée par un couvercle d'isolateur (14) et un couvercle de bride (11) qui peut être fixé à la bride de base (10) de la partie B, et
- un système de levage est agencé entre un support (26) et une plaque de support (6) pour une compensation de longueur du compensateur (7) qui atteint l'isolateur lorsqu'un récipient de préparation est accosté, dans lequel
- sur le couvercle d'isolateur (14) se trouve un dispositif de rotation (15) ayant une pièce formée (16) rotative qui montre en direction du couvercle de bride (11) et qui peut être insérée avec son contour de bord extérieur dans une cavité complémentaire (17) du couvercle de bride (11), permettant ainsi par conséquent un mouvement de rotation indépendant du sens du couvercle de bride (11) autour de son axe central,
- dans lequel le système d'accostage est conçu de telle sorte que, à l'aide de fermetures rotatives (18, 19) agissant diamétralement, selon le sens de rotation, soit le couvercle de bride (11) est relié à la bride de base (10) et, d'autre part, la liaison entre le couvercle de bride (11) et le couvercle d'isolateur (14) est ouverte, et, lorsque le sens de rotation est inversé, le couvercle de bride (11) est relié au couvercle d'isolateur (14) et la liaison entre le couvercle de bride (11) et la bride de base (10) est ouverte, et
- que sur le bord extérieur du couvercle d'isolateur (14) et sur la bride de base (22) se trouve un dispositif de pivotement qui est conçu pour ouvrir et fermer le couvercle d'isolateur (14).

2. Système d'accostage selon la revendication 1, **caractérisé en ce que** les éléments de fermeture (1, 2, 3) peuvent être manipulés chacun par une commande de pivotement (12).

3. Système d'accostage selon l'une quelconque des revendications précédentes, **caractérisé en ce que** le compensateur (7) est réalisé à partir d'un matériau élastiquement déformable.

4. Système d'accostage selon l'une quelconque des revendications précédentes, **caractérisé en ce que** le système de levage disposé dans la partie B est formé d'au moins trois vérins de levage (5) et présente des éléments de fermeture qui sont disposés chacun à distances angulaires égales les uns des autres.

5. Système d'accostage selon l'une quelconque des revendications précédentes, **caractérisé en ce qu'**un anneau coulissant (8) est disposé entre la plaque de support (6) et une bride de support (9).

6. Système d'accostage selon l'une quelconque des revendications précédentes, **caractérisé en ce que** le récipient de préparation respectif avec la partie B attachée peut être déplacé horizontalement, au moyen d'un mécanisme de roulement, sous l'isolateur à des fins de positionnement.
